# EUROPEAN PATENT APPLICATION

(11) **EP 1 273 538 A1**
(43) Date of publication of application: **08.01.2003**
(21) Application number: 02254645.1
(22) Date of filing: 02.07.2002
(51) Int. Cl.: B65G 47/22, B65G 47/244

(54) **Reorientation device for articles**

(30) Priority: 02.07.2001 GB 0116175
(71) Applicant: ISHIDA EUROPE LIMITED, Birmingham B32 3DB (GB)
(72) Inventor: Bennett, Robert, Pelsall, Walsall West Midlands WS3 4EQ (GB)
(74) Representative: Stuart, Ian Alexander

(57) **Abstract**

An apparatus and method for reorienting objects such as packaged poultry. An object (12) is carried by a conveying surface (14) so as to contact an elongate angled abutment surface (24). The object is partly turned thereby, then fed into a narrowing gap between a pair of gates (32, 34). The object is thus aligned in the conveying direction and centred on the axis of the gates. It is momentarily halted. It may be detected by a photocell (44) which triggers the opening of the gates to allow the onward conveying of the object.

## Description

The present invention relates to an apparatus and method for the reorientation of articles. It is mainly concerned with articles of moderate weight (e.g. from a few hundred grams to a few kilograms) and which might be damaged by rough handling.

In the preparation of packaged items for sale in supermarkets, such as poultry and other meat products, a food item is commonly placed on a tray and over-wrapped in a packaging machine. The wrapped article emerges from the packaging machine and is placed on a conveying belt. Conventional packaging machines tend to output articles in a fixed orientation, generally with their longest axes extending across the output conveyor. For subsequent operations, such as printing, this tends to be the wrong orientation. Up to now, it has been necessary to reorient all the articles by hand. The present invention enables this to be automated.

Thus in a first aspect, there is provided reorientation apparatus comprising a conveyor having a support surface for an article to be reoriented, the conveyor being operable to displace the support surface in a conveying direction; an abutment having an elongate abutment surface extending at an angle to the conveying direction adjacent the support surface so that an article being conveyed by the displacement of the support surface may contact the abutment surface, continued displacement while the article is in contact with the support surface tending to turn the article as it slides in contact with the abutment surface; and an orienting gate assembly downstream of the abutment surface in the conveying direction, said gate assembly having a pair of gates displaceable between a first narrow or closed configuration in which they define a passage that narrows in the conveying direction such that an article can pass into the passage and be trapped; and a second, open configuration in which the passage is wider at least at the downstream end so that a trapped article may be released.

The support surface and the abutment surface should have frictional properties such that an article tends to be turned by the contact with them. The gates will generally have low friction surfaces, such that an article can slide into the narrowing passage, in which process the reorientation begun by contact with the abutment surface is continued so that the article ends up with a predetermined orientation relative to the conveying direction, and is centred on a line through the gate assembly.

In a second aspect the invention provides a method of reorienting articles in which an article is conveyed on a frictional support surface, caused to abut an angled frictional abutment surface, continued conveying causing the article to turn; and thereafter the article is passed into a narrowing passageway defined between a pair of low-friction gates, the article being momentarily stopped by engagement with the gates, the gates then being opened to allow the article to continue to be conveyed. The method may employ the apparatus according to the first aspect.

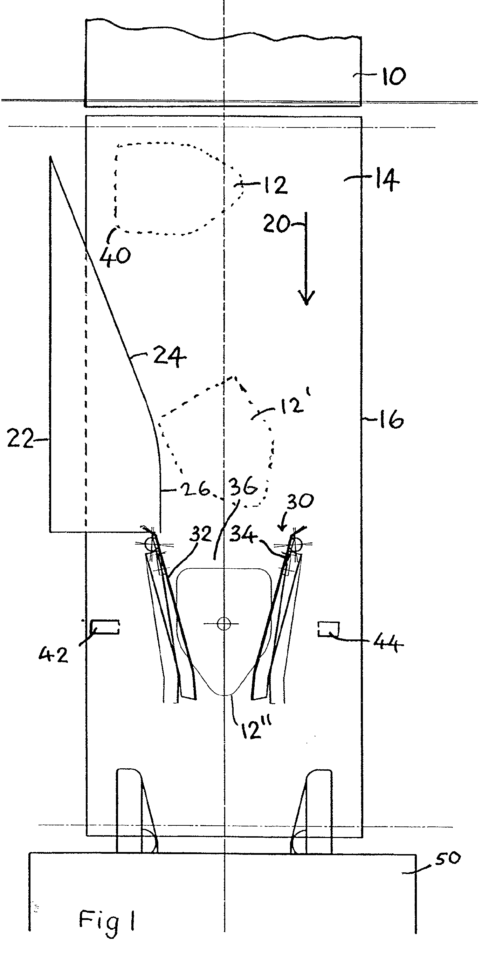

An embodiment of the invention will now be described in greater detail with reference to the accompanying drawing, in which the sole figure is a schematic plan view of apparatus including an embodiment of the invention.

The drawing shows part of a production line for producing packaged and labelled chickens, e.g. for sale in supermarkets. At the upstream end, part of a packaging unit 10 is shown. The output of this is packaged chickens 12, each consisting of a tray, a chicken on the tray, and plastic over-wrapping. The packaged chickens 12 are fed onto a conveying surface 14 of a belt conveyor 16 which is part of the apparatus of the present invention. As illustrated in an upper region of the drawing, the packaging unit 10 places the packaged chickens 12 with their long axis extending transversely to the conveyor 16. Furthermore, the chickens 12 are off-centre.

In use, the conveying surface 14 moves in the direction of the arrow 20. An abutment member 22 is mounted over the conveying surface 14, close to it but not in contact. It has a vertically extending abutment face 24. The main portion of this extends at a small angle (about 20°C) to the conveying direction. The downstream end portion 26 is parallel to the conveying direction.

Downstream of the abutment number 22, there is an orienting gate assembly 30. This includes a pair of pivotally mounted gates 32, 34 whose bottom edges are slightly spaced from the conveying surface 14. The gates are pivoted adjacent their upstream ends, about vertical axes. They are spring-biased to rest positions in which they define a channel 36 which narrows in the conveying direction. The passage may be open at the end as shown, or could be closed. An actuator is provided for simultaneously pivoting the pair of gates 32, 34 in opposite senses, to widen the downstream end of the passageway. The gates have inwardly-facing abutment surfaces of low friction. The gate assembly is centred on the conveyor 16.

The abutment member 22 is shaped and positioned so that it tends to feed articles (packaged chickens) into the passage 36.

In operation, a packaged chicken 12 is placed on the conveyor surface 14 by the packaging machine 10, as shown at the top of the figure. Motion of the surface 14 in the direction of the arrow 20 brings a corner region 40 of the package 12 into contact with the main angled portion of the abutment surface 24. The materials of the conveyor surface 14 and the abutment surface 24 are selected to be of fairly high friction. Thus the continuing motion of the conveyor causes the abutment surface 24 to exert a torque on the chicken 12, leading to clockwise turning. By the time the chicken 12 reaches the final part of the abutment surface 24, as shown by the second image 12', it has been displaced until it is substantially central on the conveyor, and rotated so that its axis is at a much smaller angle to the conveying direction as shown by the second image of the packaged chicken 12'.

The continued motion of the conveyor carries the chicken into the gate assembly 30. It contacts the abutment surfaces of both gates 32, 34. These are low friction surfaces, angled to assist the chicken to rotate further and to assume the centralised position, with its axis parallel with the conveying direction, as shown for the third image of the package 12''.

The presence of the chicken 12'' within the passage 36 is detected. For example, there may be a radiation source 42 arranged to direct a beam of radiation across the conveyor, beneath the doors 32, 34, to be detected by a photocell 44 unless it is interrupted by the presence of a chicken 12''. After a predetermined interval, selected to allow the continuing motion of the conveying surface 14 to effect final reorientation, the actuator for the gates is automatically operated, to cause them to open momentarily, to allow the chicken 12'' to continue. It exits the conveyor 16 and passes to a further workstation 50, e.g. for the application and/or printing of a label.

## Claims

1. Reorientation apparatus comprising a conveyor having a support surface for an article to be reoriented, the conveyor being operable to displace the support surface in a conveying direction; an abutment having an elongate abutment surface extending at an angle to the conveying direction adjacent the support surface so that an article being conveyed by the displacement of the support surface may contact the abutment surface, continued displacement while the article is in contact with the support surface tending to turn the article as it slides in contact with the abutment surface; and an orienting gate assembly downstream of the abutment surface in the conveying direction, said gate assembly having a pair of gates displaceable between a first narrow or closed configuration in which they define a passage that narrows in the conveying direction such that an article can pass into the passage and be trapped; and a second, open configuration in which the passage is wider at least at the downstream end so that a trapped article may be released.

2. Apparatus according to claim 1 in which the support surface and the abutment surface have relatively frictional surfaces whereas the gates have low friction surfaces.

3. Apparatus according to claim 1 or claim 2 wherein the gates are mounted so as to be slightly spaced from the support surface; and a radiation source and radiation detector are mounted on respective sides for passing radiation across the passage and detecting interruption of the radiation.

4. Apparatus according to any preceding claim including an actuator for urging displacement of the gates from their first configuration to their second configuration.

5. Reorientation apparatus substantially as described herein with reference to and as illustrated in the accompanying drawing.

6. A method of reorienting articles in which an article is conveyed on a frictional support surface, caused to abut an angled frictional abutment surface, continued conveying causing the article to turn; and thereafter the article is passed into a narrowing passageway defined between a pair of low-friction gates, the article being momentarily stopped by engagement with the gates, the gates then being opened to allow the article to continue to be conveyed.

7. A method according to claim 6 which employs the apparatus according to any preceding claim.

8. A method of reorienting articles substantially as described herein with reference to and as illustrated in the accompanying drawing.
